# EUROPEAN PATENT SPECIFICATION

(11) **EP 2 289 816 B1**
(45) Date of publication and mention of the grant of the patent: **19.11.2014**
(21) Application number: 10173101.6
(22) Date of filing: 17.08.2010
(51) Int. Cl.: B65D 73/00, B65D 75/58

(54) **Unitized package and method of making same**
Verbundene Verpackung und Verfahren zu deren Herstellung
Emballage unitarisé et procédure pour sa production

(30) Priority: 24.08.2009 US 236425 P
(43) Date of publication of application: 02.03.2011
(73) Proprietor: AKI, Inc., New York, NY 10019 (US)
(72) Inventor: Greenland, Steven J., Hampton, NH 03842 (US)
(74) Representative: Zeller, Andreas

(56) References cited:
- EP-A2- 1 234 521
- GB-A- 2 390 841
- US-A1- 2009 071 978

## Description

The invention generally relates to unitized packages for containing and dispensing a product material as it is e.g. known from US 2009/071978. In particular, the unitized packages comprise a printed base card and a fluid vessel permanently bonded to a portion of the base card. The fluid vessel comprises a first laminate barrier layer comprising at least one layer of a biaxially oriented thermoplastic polymer, a portion of which is formed into a modified dome shape, and a planar second laminate barrier layer. The invention also relates to methods of making such unitized packages.

### BACKGROUND OF THE INVENTION

Squeezable containers are used in packaging and dispensing various formulations of cosmetic, personal care and household products. Metal tubes are an example of such containers. Metal tubes are airtight and therefore afford protection to the product materials contained in the tubes through long periods of storage. However, metal, such as aluminum foil, is difficult to form and the manufacturing of metal tubes is often costly.

Squeezable containers have also been fabricated with plastics. Though relatively inexpensive to manufacture, plastic containers do not provide the same level of protection to the product materials as the metal tubes provide due to the permeability of the plastic. As a result, shelf life of the product materials contained in plastic containers is often shorter.

Flexible packages or pouches, such as those used for condiments, are another example of squeezable plastic container. More recently, small volume pouches have been fabricated to include a header section that is flat and unfilled with the product materials to expand their visual presence and graphic message. However, such flexible pouches have a number of drawbacks. For example, the header section of the flexible pouches lacks sufficient rigidity and causes thermal distortion. Additionally, since the product materials are generally distributed throughout a largely two dimensional area, it is difficult to produce desired fluid flow of the product material toward the opening of the pouches. Dispensing high viscosity fluids is particularly problematic. Due to the lack of any defined three dimensional shape, flexible pouches require a greater surface area to store a given volume of the product material, which is often accompanied by greater vapor transmission through the surface area, a greater tendency for phase separation (particularly if the product material is an emulsion), and a greater potential of losing the product material due to scalping by thermoplastic packages.

In addition, small volume squeezable containers often suffer from lack of visual appeal and difficulty in retail placement. In particular, such squeezable containers lack enough surface area to accommodate textual or graphic messages for promotional or instructional purposes. As a result, they must be packaged with a secondary container such as a printed carton or a blister pack that bears the requisite textual or graphic messages. However, since such squeezable containers must be separated from the secondary container prior to use, the promotional or instructional messages printed on the secondary container are often overlooked or lost prior to the time of use.

There is therefore a need for an improved squeezable package that provides adequate vapor barrier characteristics and shelf life; is capable of maintaining a predetermined shape with sufficient rigidity prior to use; allows dispensing of the product material in a controlled fashion; and ensures the presence of the promotional or instructional messages at the time of use. Also needed is an economical and efficient process for manufacturing such a squeezable package.

### SUMMARY OF THE INVENTION

The present invention provides a unitized package which includes a base card and a fluid vessel that is permanently bonded to a portion of the base card.

In one embodiment, the unitized package comprises a printed base card and a fluid vessel. The fluid vessel comprises a first laminate barrier layer comprising at least one layer of a biaxially oriented thermoplastic polymer, a product material, and a second laminate barrier layer. A portion of the first laminate barrier layer is formed into a modified dome shape with a defined volume. The product material substantially fills the defined volume. The first laminate barrier layer and the second laminate barrier layer are sealed together at their perimeters to form a fluid-tight enclosure for containing the product material. The second laminate barrier layer of the fluid vessel is permanently bonded to a portion of the printed base card.

Preferably, the modified dome shape of the first laminate barrier layer is resiliently sustainable when the fluid vessel is sealed.

The biaxially oriented thermoplastic polymer may comprise a polyethylene, a polypropylene, a polyester, a polyamide, a polyarylate, or a mixture thereof. In a preferred embodiment, the biaxially oriented thermoplastic polymer comprises polyethylene terephthalate.

In one embodiment, one or both of the first and second laminate barrier layers comprise a layer of aluminum foil. Preferably, the aluminum foil is less than about 0,0254 mm (0.001 inches) in thickness.

The product material is preferably a liquid.

In another embodiment, the fluid vessel further comprises a dispensing tip. The base card comprises an opening strip defined by a line of perforation that intersects the dispensing tip. Once the opening strip is removed, the product material may be dispensed from the dispensing tip. In a preferred embodiment, the fluid vessel also comprises a planar extension tab formed by the first and second laminate barrier layers. The extension tab encloses the dispensing tip and overlays the opening strip. The dispensing tip also may be reclosable.

Preferably, the base card is less flexible than the first laminate barrier layer of the fluid vessel. The base card may comprise paper stock. Also, one or both surfaces of the base card may be printed with any promotional or instructional messages for marketing or regulatory compliance purposes.

Also provided is a cost effective method of making a unitized package described above. In one embodiment, the method includes providing a printed base card, fabricating a fluid vessel comprising a first laminate barrier layer and a second laminate barrier layer, and permanently bonding the fluid vessel to the printed base card. The fluid vessel is fabricated by: (i) forming a portion of the first laminate barrier layer, which comprises at least one layer of a biaxially oriented thermoplastic polymer, into a modified dome shape with a defined volume; (ii) depositing a product material onto the first laminate barrier layer such that the product material substantially fills the defined volume; (iii) disposing the second laminate barrier layer, which is planar, on the first laminate barrier layer; and (iv) sealing the first and second laminate barrier layers together at their perimeters to form a fluid-tight enclosure for containing the product material. Preferably, the modified dome shape of the first laminate barrier layer is resiliently sustainable when the fluid vessel is sealed.

The biaxially oriented thermoplastic polymer may comprise a polyethylene, a polypropylene, a polyester, a polyamide, a polyarylate, or a mixture thereof. Preferably, the biaxially oriented thermoplastic polymer comprises polyethylene terephthalate.

In one embodiment, one or both of the first and second laminate barrier layers comprise a layer of aluminum foil. Preferably, the aluminum foil is less than about 0.001 inches in thickness.

In one embodiment, the first and second laminate barrier layers are sealed together by heat sealing. In another embodiment, the first and second laminate barrier layers are bonded together using radio frequency energy, sonic energy, or an adhesive.

In a preferred embodiment, the modified dome shape of the first laminate barrier layer is formed by applying gas pressure to a portion of the first laminate barrier layer. The gas pressure may be about 1 bar (15 psi) to about 9,7 bar (140 psi) and the gas pressure may be applied for a time period ranging from about 0.01 seconds to about 1.0 seconds.

In another embodiment, the fluid vessel further comprises a dispensing tip. The base card is die cut to form an opening strip defined by a line of perforation. The opening strip, once removed, allows access to the product material from the dispensing tip. In a preferred embodiment, the first and second laminate barrier layers are sealed together at their perimeters to form the fluid-tight enclosure and a planar extension tab. The extension tab encloses the dispensing tip and overlays the opening strip. The dispensing tip also may be reclosable.

The present invention thus provides an improved squeezable package. In particular, a formed biaxially oriented thermoplastic polymer is used to fabricate the present unitized package. A biaxially oriented thermoplastic polymer offers several advantages over other plastic materials traditionally used in thermoformed containers, e.g., it provides for superior barrier characteristics relative to its thickness and cost benefit. However, biaxially oriented thermoplastic polymer is routinely rejected in known forming processes, largely because its use requires a substantially greater force to form into a desired shape and the obtainable formed profile is severely limited.

It has been found that a laminate barrier layer comprising at least one layer of a biaxially oriented thermoplastic polymer can be sufficiently formed using the forming process disclosed herein to provide a modified dome shape without exceeding the ultimate tensile value of the biaxially oriented thermoplastic polymer, thus preserving its superior barrier characteristic. Additionally, the present forming process increases the degree of the biaxial orientation and resistance to further deformation of the biaxially oriented thermoplastic polymer. As a result, the formed modified dome shape can be resiliently sustained by the product material and/or gases contained in the unitized package until the time of use.

### BRIEF DESCRIPTION OF THE FIGURES

**Fig. 1a** is a plan view of a first embodiment of a unitized package.

**Fig. 1b** is a cross-sectional view of the unitized package of **Fig. 1a** along **A-A.**

**Fig. 2** is a plan view of a second embodiment of a unitized package with a reclosable fluid vessel.

**Fig. 3a** is a plan view of a lower platen for fabricating the first laminate barrier layer of the unitized package.

**Fig. 3b** is a cross-sectional view of the lower platen of **Fig. 3a** along **B-B.**

**Fig. 4a** is a side view of a lower platen and an upper platen for fabricating the first laminate barrier layer of the unitized package, before pressurized gas is applied.

**Fig. 4b** is a side view of the lower and upper platens of **Fig. 4a****,** when the pressurized gas is initially applied.

**Fig. 4c** is a side view of the lower and upper platens of **Fig. 4a****,** when the pressurized gas is fully applied.

### DETAILED DESCRIPTION OF THE INVENTION

### I. Unitized Packages

The present unitized package generally comprises a printed base card and a fluid vessel permanently bonded to a portion of the base card. The fluid vessel comprises a first laminate barrier layer and a second laminate barrier layer enclosing a product material. The first laminate barrier layer comprises at least one layer of a biaxially oriented thermoplastic polymer, and a portion of the first laminate barrier layer is formed into a modified monolithic dome shape. The second laminate barrier layer is planar.

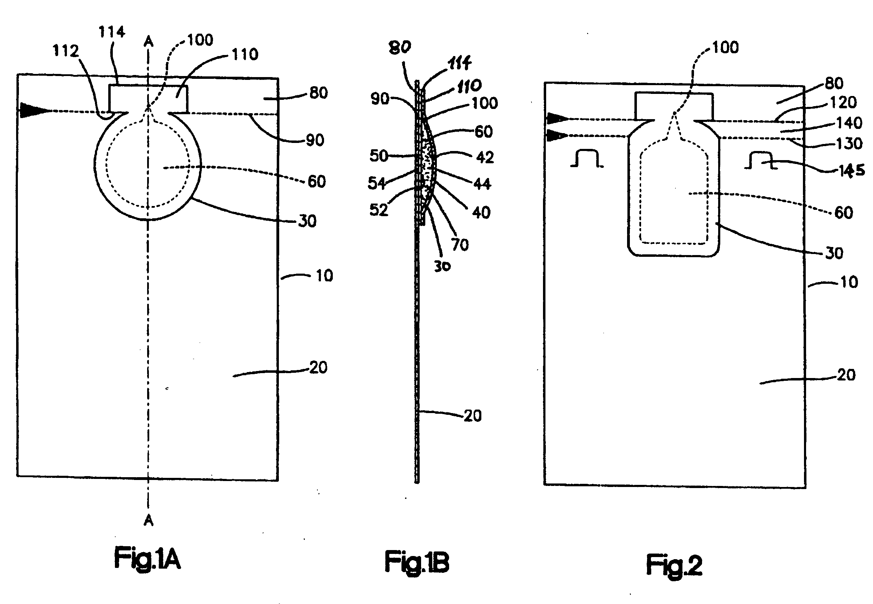

**Fig. 1a** shows a first embodiment of the present unitized package. The unitized package **10** includes a printed base card **20** and a fluid vessel **30.** **Fig. 1b** shows a cross-sectional view of the unitized package **10** in **Fig. 1a** along **A-A.** As shown in **Fig. 1b****,** the fluid vessel **30** comprises a first laminate barrier layer **40** and a second laminate barrier layer **50.** The first laminate barrier layer **40** has an inner surface **42** and an outer surface **44.** The second laminate barrier layer **50** has an inner surface **52** and an outer surface **54.** The inner surface **42** of the first laminate barrier layer **40** and the inner surface **52** of the second laminate barrier layer **50** are sealed together at their perimeters, forming a fluid-tight enclosure **60.** A product material **70** substantially fills the volume of the fluid-tight enclosure **60.**

The first and second laminate barrier layers are barrier layers, *i.e.,* they are substantially inert and preferably impermeable to the product material contained in the fluid vessel in order to substantially prevent migration of components of the product material through the layers. Various types of plastic film with barrier property, e.g., polyethylene terephtalate ("PET"), celluloses or acetates, may be used to fabricate the laminate barrier layers. The laminate barrier layers may also incorporate specialty vapor barrier coatings to impart or enhance their barrier characteristics. In addition, a material that does not possess barrier properties may be coated or treated in order to give it barrier properties so that the material may be used to form the laminate barrier layers. Depending on the components of the product material, a barrier material may be chosen which is a barrier to, for example, oil, gas, water vapor, aroma, or oxygen.

The first laminate barrier layer and the second laminate barrier layer of the unitized package are preferably constructed with thin flexible thermoplastic barrier laminations. The first laminate barrier layer comprises at least one layer of a biaxially oriented thermoplastic polymer. A biaxially oriented thermoplastic polymer is a polymer that has been stretched in two directions (*i*.*e*., the machine direction and cross-machine direction) under conditions that result in the reorientation of the polymer. As a result of such polymer orientation, the barrier characteristics and the physical strength of the polymer are improved. A biaxially oriented thermoplastic polymer has a substantially high tensile strength in either machine or cross machine direction, and is generally resistant to further elongation.

Suitable biaxially oriented thermoplastic polymers include, but are not limited to, polyesters, polyamides which includes nylons and amorphous polyamides, polyarylates, polypropylenes, polyethylenes, or mixtures thereof.

A preferred biaxially oriented thermoplastic polymer is a polyester such as polyethylene terephthalate (PET), sold under the trade name MYLAR^{®} manufactured by DuPont Tejlin Films, due to the comparable strength and elongation characteristics of the polyester film along both machine and cross machine directions. Other preferred biaxially oriented thermoplastic polymers include, but are not limited to, polyamides such as nylon film, sold under the trade name Capran Emblem^{®} manufactured by Honeywell, and biaxially oriented polypropylene films (BOPP) such as those manufactured by Exxon-Mobil.

In addition, the first and second laminate barrier layers may each comprise more than one layer of composite materials.

The first and second laminate barrier layers may also each incorporate metallic, semi metallic, metal oxide or ceramic materials to improve the moisture-vapor characteristics of these layers. Examples of such lamination construction may include those manufactured in accordance with U.S. Military specification Mil-B-131 Class I , as well as many commercial laminations such as those used for medical diagnostic testing or distribution of food service condiments.

In one embodiment, the first and the second laminate barrier layers may each comprise a layer of thin gage metal. The metal layer, such as an aluminum foil layer, provides for low moisture vapor transmission rates that are desired in squeezable containers. Any aluminum grades may be used, though those that are more malleable are preferred. A particularly preferred aluminum is a thin gage aluminum layer which does not cause loss of the desirable resilient characteristics of the sealed fluid vessel, is not easily dented or otherwise damaged in transportation, and yet provides the desired reduction in moisture vapor or oxygen transmission rate.

In one embodiment, the first laminate barrier layer may comprise an inner thermoplastic heat seal layer with thickness in the range of about 0,0127 mm (0.0005 inches) to about 0,1016 mm (0.0040 inches) and an outer layer of a biaxially oriented thermoplastic polymer film with thickness in the range of about 0,01016 mm (0.0004 inches) to about 0,0508 mm (0.002 inches). A supplemental barrier layer, preferably an aluminum foil layer, with thickness in the range of about 0,006858 mm (0.00027 inches) to about 0,0254 mm (0.001 inches) may also be included between the heat seal layer and biaxially oriented thermoplastic film. Preferably, the outer layer is constructed with a biaxially oriented polyester polymer film with thickness in the range of about 0,0122 mm (0.00048 inches) to about 0,02337 mm (0.00092 inches).

The second laminate barrier layer may have the same or different compositions as the first laminate barrier layer. Because the second laminate barrier layer is not formed, use of a biaxially oriented thermoplastic film in the structure is not required.

As shown in **Fig. 1b****,** the first laminate barrier layer **40** has a modified monolithic dome shape formed therein. The terms "modified monolithic dome shape" or "modified dome shape", as used in this application, refer to any suitable three-dimensional protrusion with a smooth surface from a planar base, and include, but are not limited to, a hemisphere shape, a low profile sphere shape (e.g., the height of the profile is less than the radius of the base in the case of a circular base), or a torus shape. Preferably, the modified dome shape is a low profile sphere shape, such as that shown in **Fig. 1****b.**

The planar base of the modified dome shape may have any desired shape, preferably a rounded shape, and any desired dimensions. The modified dome shape in **Fig. 1a** has a circular base. Other suitable bases of the modified dome shape include, but are not limited to, ovals, ellipses or simple squares or rectangles with soft radius corners (as shown in **Fig. 2****).**

Any portions of the first laminate barrier layer that do not have the formed modified dome shape (*i*.*e*., the portions surrounding the planar base of the formed shape) are preferably planar. Preferably, the second laminate barrier layer is also planar.

The product material may be any material that is suitable to be packaged and distributed in a unitized package. Preferably, the product material is a substantially unadulterated cosmetic, personal care product, medical product, or household product. Examples include face cream, shampoo, toothpaste, liquid medicine, and detergent. Substantially unadulterated products include any product materials presented in their original or natural form, without being altered in any significant way. The product material may be presented in any suitable form, such as in a gel form, in a powder form, in microcapsules, contained in a matrix material, or, preferably, in a liquid form. In addition, the product material may comprise volatile and/or non-volatile components. The quantity or volume of the product material may be suitable as a sample, or for single or multiple uses.

Preferably, the product material substantially fills the volume defined by the modified dome shape of the first laminate barrier layer.

The first and second laminate barrier layers **40** and **50** are sealed together at their perimeters. As shown in **Fig. 1b****,** the inner surface **42** of the first laminate barrier layer **40** and the inner surface **52** of the second laminate barrier layer **50** are sealed together at their perimeters, forming a fluid-tight enclosure **60** for containing the product material **70.** The seal may be formed using any suitable method, such as by heat sealing, by radio frequency or sonic energy, or by adhesives. Preferably, the seal is a hermetic permanent seal. Permanent seals, also referred to as destruct or tear bonds, may be formed by the methods described above.

Adhesives must be compatible with the product material, *i*.*e*., they should not react or become plasticized when they come into contact with the product material or components of the product material. Such reaction may cause undesirable deterioration of the product material or the seal.

In one embodiment, at least one of the inner surfaces **42** and **52** comprises a pressure sensitive adhesive, such as a low odor pressure sensitive adhesive that has been applied from a water borne emulsion. The pressure sensitive adhesive may cover the entire contact area between the first laminate barrier layer and the second laminate barrier layer. Alternatively, the adhesive may be applied in a specific pattern of lines or dots. Another example is specialty grades of hot melt adhesive, especially those that can provide a cross link functionality. Also, adhesives may be formulated to provide additional barrier properties. Such adhesives may contain agents such as oxygen scavengers or consist of film-forming precursors of high-barrier materials, such as latex-grade polyvinylidene chloride (PVdC).

If a permanent seal is used, the unitized package **10** also must be provided with a means for opening the fluid vessel **20,** such as by tearing one of the first laminate barrier layer or the second laminate barrier layer, or both. The opening means may include a dispensing tip **100** as shown in **Fig. 1a****,** a notch or a string to originate or facilitate the tear. The opening means may also be reclosable or resealable.

When the first and second laminate barrier layers **40** and **50** are sealed together at their perimeters to form a fluid-tight enclosure **60,** the product material **70** substantially fills the volume of the enclosure (*i*.*e*., the volume defined by the modified dome shape of the first laminate barrier layer), and leaves minimal head space (*i*.*e*., the space that is occupied by ambient air) in the enclosure. By utilizing the defined volume of the enclosure to the fullest extent, maximum stability of the contained product material may be achieved. Also, the product material, especially when in fluid form, and other fluids (*i*.*e*., liquid or gas) in the enclosure if any, provide internal pressure and force to sustain the formed shape of the first laminate barrier layer. Thus, when the fluid vessel is sealed, the formed modified dome shape of the first laminate barrier layer is resiliently sustainable, *i*.*e*., the layer will show minor pressure deformation when force is applied to its outer surface, but will substantially self restore to its original shape on release of the force. Also once formed and sealed, the fluid vessel is resistant to flexing and may contribute to the rigidity of the base card.

In a preferred embodiment, the inner surface **42** of the first laminate barrier layer **40** is heat sealed to the inner surface **52** of the second laminate barrier layer **50** prior to bonding the fluid vessel **30** to the base card **20.**

The outer surface **54** of the second laminate barrier layer **50** is permanently bonded to a portion of the base card **20.** The second laminate barrier layer may be bonded with a laminating adhesive, or by any other suitable attachment means, such as by adhesives activated by heat, moisture, pressure, drying or radiation curing. In one embodiment, a full bleed adhesive system is incorporated into the outer surface **54** of the second laminate barrier layer **50.** Preferably, the full bleed adhesive system comprises a permanent pressure sensitive adhesive such as a permanent pressure sensitive acrylic adhesive. The permanent pressure sensitive adhesive may be covered and protected by a release liner such as a disposable silicone coated release liner.

Any desired material may be used for fabricating the base card. Since the enclosure formed by the first and second laminate barrier layers is fluid tight and also is preferably formed prior to bonding to the base card, the base card material will not be exposed to the product material contained in the enclosure; nor will it be exposed to the heat or other energies used for sealing the first and second laminate barrier layers. Suitable materials for the base card include but are not limited to paper such as cover grade or light gage tag stock. Synthetic paper or other plastic materials may also be used. Preferably, the base card comprises a paper stock for environmental reasons and overall cost efficiency. Paper of varying grades and compositions, including recycled, colored, textured, coated, or uncoated, may be used. In one embodiment, the base card is fabricated from grades of solid bleached sulfite paperboard or coverstocks, and has a thickness in the range of about 0,1524 mm (0.006 inches) to about 0,61 mm (0.024 inches). The base card may also be coated with various water based or energy cured polymer coatings, or overlaminated with thermoplastic films to protect the paper and any printed graphics from humidity damage.

Preferably, the base card has a sufficiently large surface area extending beyond the fluid vessel so that any desired advertising artworks, texts, graphics, product information or instructions, or drug ingredient information may be printed on any surface of the base card. Also, the fluid vessel may be positioned or sized such that sufficient surface area on the base card is available to achieve brand promotion, consumer education, or compliance with any applicable regulatory requirements such as those imposed by the U.S. Food and Drug Administration. Since the fluid vessel is permanently bonded to the printed base card, the presence of any product marketing or instructional information printed on the base card is ensured at the time of use.

The printed base card may be of any suitable dimension or configuration as long as there is a planar surface to which the fluid vessel may be permanently bonded. As shown in **Fig. 1a****,** the printed base card may be planar. The printed base card may also be scored or otherwise folded to form a common 4 or 6 page format. Such configuration functions to substantially increase the usable surface of the base card, while limiting the finished dimensions. The printed base card may also be folded such that it can stand up vertically. The base card may also comprise a portion of a panel incorporated as a portion of a die cut box or a greeting card. As a further example, the folded base card may provide reduced finished dimensions to facilitate placement of the unitized package into an existing host container or to fall within the scope of desired U.S. Postal mailing dimensions. The base cards may also contain a hang hole for retail peg display purposes.

As shown in **Fig. 1a****,** the printed base card **20** may have an opening strip **80** defined by a line of perforation **90** intersecting the dispensing tip **100.** When the opening strip **80** is removed by tearing or cutting along the line of perforation **90,** the fluid vessel **30** will be opened, thus allowing access to the product material **70.**

The fluid vessel **30** may also comprise a planar extension tab **110** which is permanently bonded to the printed base card **20.** As shown in **Fig. 1a****,** the extension tab **110** is formed from the first laminate barrier layer **40** and the second laminate barrier layer **50.** The dispensing tip **100** is enclosed between the lower edge **112** and the upper edge **114** of the extension tab **110.** The extension tab **110** overlays the opening strip **80,** with its lower edge **112** and the line of perforation **90** on the printed base card **20** being superimposed. Thus, when the base card is torn or cut along the line of perforation **90,** the extension tab **110** and the opening strip 80 will both be removed, and the product material **70** may be accessed.

The printed base card may also incorporate a reclosable or resealable feature for the fluid vessel. For example, as shown in **Fig. 2****,** the printed base card has two lines of perforation **120** and **130** intersecting the dispensing tip **100.** The first line of perforation **120** defines an opening strip **80** and the second line of perforation **130** defines a folding flap **140.** In one embodiment, the distance between the two perforated lines may be any desired distance, but preferably is at least about 0.5 inches. The base card further contains at least one locking tab **145.** When an opened unitized package is not in use, the folding flap **140** may be folded along the second line of perforation **130** and inserted under the locking tabs **145,** thus preventing the product material **70** from being released from the enclosure **60.**

### II. Method of Manufacturing the Unitized Packages

The present unitized packages may be manufactured using various methods. The methods generally include the following manufacturing steps: providing a printed base card; forming a fluid vessel; and permanently bonding the fluid vessel to a portion of the printed base card. Generally, the fluid vessel is fabricated by forming a portion of the first laminate barrier layer into a modified dome shape; depositing the material into the volume defined by the modified dome shape; disposing the second laminate barrier layer on the formed first laminate barrier layer; and sealing the first laminate barrier layer and the second laminate barrier layer together at their perimeters to form a fluid-tight enclosure for containing the product material. The materials described above in Section I for the unitized package may also be used in the method.

The printed base card may be made before or after the fluid vessel is made. Preferably, the printed base card is made prior to the manufacture of the fluid vessel.

As described above, the base card may be fabricated from a variety of substrates, preferably from grades of solid bleached sulfite paperboard or cover stocks. Texts or graphics regarding product information may be printed or otherwise decorated on any surface of the base card using any suitable method. Preferred print methods include, but are not limited to, sheet fed offset, web offset, flexographic and digital imaging. The surface of the printed base card may further be coated with a UV cured polymerization coating, film lamination, or alternate coatings to impart water resistant and improved lay flat character to the base card material.

In one embodiment, the base card is further precision die cut to form a line of perforation or other cut line defining an opening strip that facilitates clean opening of the fluid vessel.

Any suitable method may be used for fabricating the fluid vessel of the present unitized package. The various steps for making the fluid vessel may be performed continuously on different stations of a manufacturing sequence. The fluid vessel may be fabricated individually or, more preferably, in multiple quantities. An example of a method for making multiple fluid vessels is described below.

The first laminate barrier layer **40** of the fluid vessel may be cold formed at the first station of the manufacturing sequence. Any suitable stress force may be used in the cold forming process, *e*.*g*., fluid pressure or vacuum. Preferably, the stress force is pressurized gas.

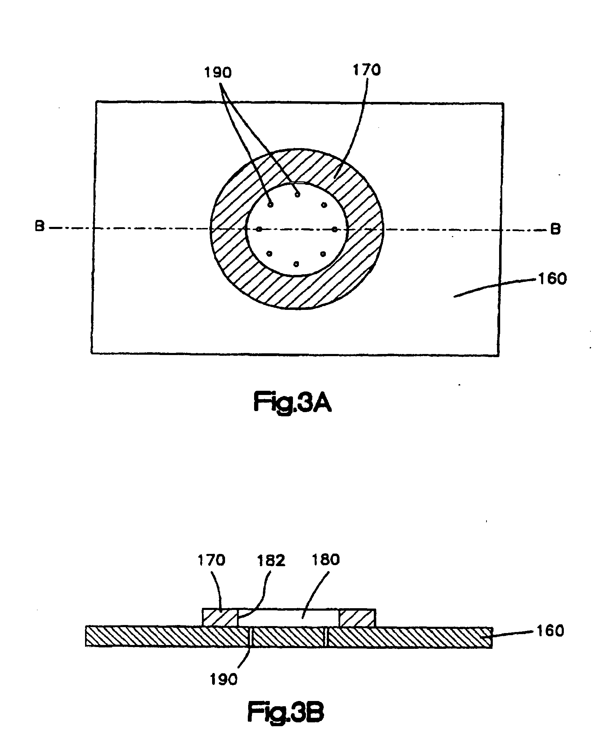

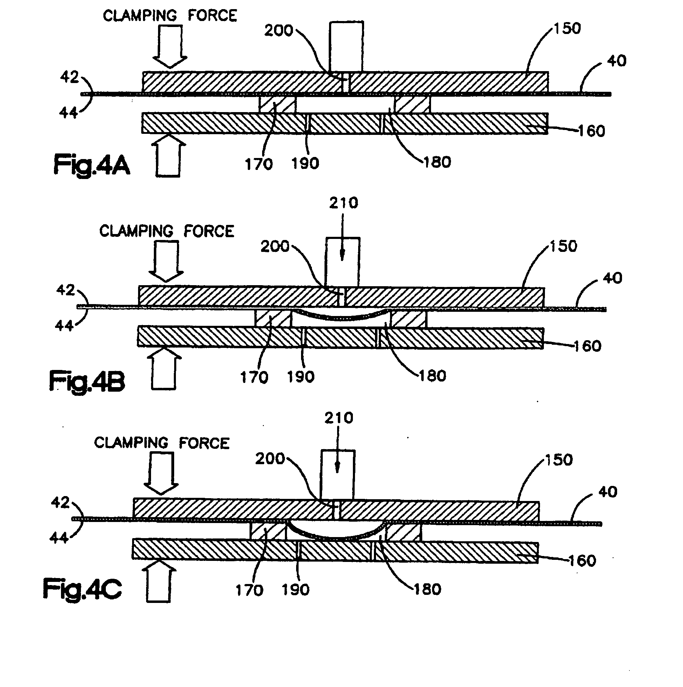

**Figs. 3a** to **4c** show an example of an assembly at a first manufacturing station that may be used to form the modified dome shape in the first laminate barrier layer. As shown in **Fig. 4a****,** the first manufacturing station is comprised of a high pressure platen assembly with two opposing surfaces, *i*.*e*., an upper platen **150** and a lower platen **160.** Preferably vertical motion of at least one of the upper or lower platens is provided.

The upper surface of the lower platen **160** comprises a plurality of facings **170** with a uniform profile. Each of the facings contains a cavity **180.** **Figs. 3a-4c** show one such facing **170.** The facing may be fabricated with any suitable resilient material using any suitable method. Preferably, the facing is fabricated with silicone rubber with a durometer value in the range of about 40 to about 80 and with a thickness in the range of about 3,175 mm (0.125 inches) to about 6,35 mm (0.250 inches). The silicone rubber facing may be used as the lower platen facing or further laminated or otherwise bonded to a pressure resistant and machinable material, *e.g.*, medium density fiberboard (MDF), to form the lower platen facing **170.** The thickness of the lower platen facing **170** may be adjusted in accordance with the specific design of the fluid vessel. For example, it is in the range of about 3,175 mm (0.125 inches) to about 25,4 mm (1.0 inches).

The lower platen facing **170** may be cut or otherwise machined to form a plurality of cavities therein. **Figs. 3a-4c** show one such cavity **180.** The planar shape of the cavity **180** determines the shape of the base of the formed modified dome shape of the first laminate barrier layer, which includes, but is not limited to, circles, ovals, ellipses or squares or rectangles with soft radius corners. The side wall **182** of the cavity **180,** generally a simply cut perpendicular to the planar surface of the lower platen **160,** does not contact the formed shape of the first laminate barrier layer and therefore need not be polished. The cavity in the lower platen facing functions in lieu of a forming die otherwise utilized in conventional thermoforming processes.

The lower surface of the lower platen facing **170** is constructed to facilitate limited flow of air between the lower platen facing **170** and the lower surface of the lower platen **160.** As shown in **Figs. 3a** and **3b****,** each lower platen facing **170** may comprise one or more vent holes **190.**

As shown in **Fig.** 4a, the upper platen **150** is fitted with air supply channels **200** that correspond with each cavity **180** in the lower platen facings **170.**

The preferred manufacturing process uses an intermittent web motion. The first laminate barrier layer **40** is drawn forward into the first station as a planar web in a horizontal orientation. The outer surface **44** of the first laminate barrier layer **40** faces downward and is engaged by the lower platen **160** and the inner surface **42** is engaged by the upper platen **150.** The upper platen **150** and lower platen **160** are then engaged by clamping force and the first laminate barrier layer **40** is secured at the perimeters of the cavity **180** of the lower platen facing 170.

Pressurized gas **210** is introduced into the upper platen **150** through the air supply channels **200.** As shown in **Fig.** 4b, as the fluid gas pressure imposed on the inner surface **42** of the first laminate barrier layer **40** builds up (the presence of the vent holes **190** on the lower platen facing **170** relieves or reduces any opposing pressure), the portion of the first laminate barrier layer **40** within the side wall **182** of the cavity **180** starts to deform under stress and bulges into the cavity **180** to form a modified dome shape. The gas pressure is controlled such that the corresponding stress force does not exceed the ultimate tensile strength of the biaxially oriented thermoplastic polymer. As such, the deformation does not significantly alter the desirable physical properties of the original biaxially oriented thermoplastic polymer; instead, it increases the degree of polymer orientation.

A suitable gas pressure is in the range of about 0,7 bar (10 psi) to about 9,7 bar (140 psi), preferably in the range of about 2,8 bar (40 psi) to about 7 bar (100 psi). Under such pressure, the first laminate barrier layer comprising a biaxially oriented thermoplastic polymer layer can undergo further biaxial elongation typically in the range of about 10 to about 25% before reaching its breaking point.

In **Fig. 4c****,** the gas pressure is fully applied. After the pressure reaches its desired level, the pressurized gas **210** is switched off and the pressure is removed. Minor shrinkage of the formed fluid vessel profile may subsequently occur due to partial elastic recovery of the biaxially oriented thermoplastic polymer. This partial recovery is not detrimental to the resulting profile.

The modified dome shape formed under the present process has a large radius curvature extending from the planar base where the first laminate barrier layer is located prior to the forming process. The maximum depth of draw is highly influenced by the geometric shape of the original plane area subject to the forming process (*i*.*e*., the planar shape of the cavity **180).** Therefore, the formed shape of the first laminate barrier layer is a result of the response of the planar laminate film to the internal pressure. Moreover, this formed shape is resiliently sustained until time of use by the internal gas or fluid inflation provided by the product materials and ambient air enclosed in the fluid vessel, without the need for any rigid vertical oriented sidewalls to impart structural strength. Other portions of the first laminate barrier layer that have not been subject to the forming process remain planar.

The use of a biaxially oriented thermoplastic polymer and pressurized gas allows for controlled redistribution of the stress force with progressive polymer chain slip and prohibits mechanical "hot spots" that would otherwise weaken the film or cause ultimate failure. Additionally, as the biaxially oriented thermoplastic polymer is elongated under tensile stress, resistance to further elongation is increased. The increased degree of orientation and resistance to further elongation is also biaxial in nature. As a result, the stressed polymer uniformly redistributes the tensile strain and prevents thinning of the polymer that would otherwise occur. Biaxially oriented PET, with its closely comparable mechanical values in the machine and cross machine directions, is a preferred biaxially oriented polymer. The use of resilient rubber on the lower platen facing also prevents mechanical hot spots or stress points at the perimeter of the cavity 180 that may otherwise lead to stress failure. The present process eliminates complications and quality issues such as buckling, wrinkling or tearing commonly associated with the stretch methods commonly used in forming processes.

As described above, a thin gage metal layer, such as an aluminum layer, may also be incorporated in the first laminated barrier layer. The presence of a biaxially oriented thermoplastic polymer in the same laminate barrier layer as the aluminum layer also prevents cracking or tensile failure of the gage metal during the forming process as it distributes the stress force during the forming process and prevents localized metal elongation to the point of failure.

Other suitable methods may be used to apply pressure to the first laminate barrier layer to form the modified dome shape therein.

Subsequent to forming, the upper platen **150** is lifted and the formed first laminate barrier layer **40** is advanced to the second station of the manufacturing sequence where the product material **70** is filled. For example, the product material **70** may be metered and discharged from fluid nozzles mounted directly over the volume defined by each of the modified dome shapes. Metering and pumping may take place while the intermittent web motion is stopped and may be accomplished through the use of a variety of suitable pumping and metering systems. The product material dispensed preferably substantially fills the volume of the formed modified dome shape. Leveling of the product material is not required and higher viscosity product material may temporarily stand above the plane of the inner surface **42** of the first laminate barrier layer **40.** Also, disposing the product material in the formed modified dome shape may prevent unwanted outward spread of the product material otherwise occurring due to momentum associated with the preferred intermittent web motion process.

At the next manufacturing station, a planar second laminate barrier layer **50** is then disposed on the inner surface **42** of the first laminate barrier layer **40.** Preferably, the second laminate barrier layer **50** comprises a pressure sensitive adhesive on its inner surface **52,** which is covered and protected by a silicone coated disposable release liner (not shown). The first and second laminate barrier layers **40** and **50** are then indexed and moved forward to a heated platen where these two layers are sealed together at their perimeters to form a fluid-tight enclosure **60.** The product material **70** is automatically smoothed and redistributed in the enclosure **60** by the planar inner surface **52** of the second laminate barrier layer **50** just prior to or during the heat seal process. In a preferred embodiment, a dispensing tip **100** is formed through the use of a simple machined relief in the lower surface of the heated upper platen. The remaining sealing takes place in such a manner that only the planar portion of the first laminate barrier layer is sealed and the modified dome shape is not disturbed.

The sealed first and second laminate barrier layers are then precision die cut to form individual fluid vessels. In a preferred method, the first and second laminate barrier layers are kiss cut together with a full bleed permanent pressure sensitive adhesive such as a permanent pressure sensitive acrylic adhesive against a release liner such as a disposable silicone coated release liner. The individual fluid vessels are mounted in a predetermined pattern on the disposable silicone coated release liner. The fluid vessels are generally not flexible when sealed.

The fluid vessel is then permanently bonded to the printed base card. This step may be accomplished by any suitable method. In a preferred embodiment, the disposable silicone coated release liner is removed and the second laminate barrier layer is bonded to the base card by the full bleed permanent pressure sensitive acrylic adhesive.

The present unitized package may be used as a product for single use or multiple uses. It may also be used as a sampling package. A consumer may open the fluid vessel, for example, by tearing off the opening strip along the line of perforation on the base card. The product material may then be dispensed by gently applying pressure on the outer surface of the first laminate barrier layer. Because the line of perforation provides a clean opening point of the fluid vessel, the product material may be dispensed in a controlled manner. Alternate methods of opening the fluid vessel include, but are not limited to; tear strings, peel off tabs, scoring of one or both of the laminate barrier layers such as with lasers, peel off header strips or frangible or peelable perimeter seals. Additionally, since the fluid vessel is permanently bonded to the printed base card, any marketing or product information printed on the base card is readily available at the time of use.

The description contained herein is for purposes of illustration and not for purposes of limitation.

## Claims

1. A unitized package (10) comprising:
(a) a printed base card (20); and
(b) a fluid vessel (30) comprising (i) a first laminate barrier layer (40) comprising at least one layer of biaxially oriented thermoplastic polymer, (ii) a product material, and (iii) a second laminate barrier layer (50),
wherein a portion of the first laminate barrier layer (40) has a modified dome shape formed therein by biaxial elongation of the first laminate barrier layer (40), the modified dome shape has a defined volume, and the product material substantially fills the defined volume, wherein the second laminate barrier (50) layer is planar, wherein the first and second laminate barrier layers (40, 50) are sealed together at their perimeters to form a fluid-tight enclosure for containing the product material,
wherein the second laminate barrier layer (50) is permanently bonded to a portion of the printed base card (20).

2. The unitized package (10) of claim 1, wherein the modified dome shape of the first laminate barrier layer (40) is resiliently sustainable when the fluid vessel (30) is sealed.

3. The unitized package (10) of claim 1 or 2, wherein the biaxially oriented thermoplastic polymer comprises a polyethylene, a polypropylene, a polyester, a polyamide, a polyarylate, or a mixture thereof.

4. The unitized package (10) of claim 3, wherein the biaxially oriented thermoplastic polymer comprises a polyethylene terephthalate.

5. The unitized package (10) of any of claims 1 to 4, wherein one or both of the first and second laminate barrier layers (40, 50) comprise a layer of aluminum foil, optionally, wherein the aluminum foil is less than 0,0254 mm (0.001 inches) in thickness.

6. The unitized package (10) of any of claims I to 5, wherein the product material is a liquid.

7. The unitized package (10) of any of claims I to 6, wherein the fluid vessel (30) comprises a dispensing tip (100).

8. The unitized package (10) of claim 7, wherein the base card (20) comprises an opening strip (80).

9. The unitized package (10) of claim 8, wherein the opening strip (80) is defined by a line of perforation that intersects the dispensing tip (100).

10. The unitized package (10) of claims 8 or 9, wherein the fluid vessel (30) further comprises a planar extension tab (110) formed by the first and second laminate barrier layers (40, 50), wherein the planar extension tab (110) encloses the dispensing tip (100) and overlays the opening strip (80).

11. The unitized package (10) of any of claims 7 to 10, wherein the dispensing tip (100) is reclosable.

12. The unitized package (10) of any of claims 1 to 11, wherein the base card (20) is less flexible than the first laminate barrier layer (40).

13. The unitized package of any of claims 1 to 12, wherein the base card (20) comprises a paper stock.

14. A method of manufacturing a unitized package (10) comprising a printed base card (20) and a fluid vessel (30), comprising:
(a) providing a printed base card (20);
(b) forming a fluid vessel (30) by:
(i) forming a portion of a first laminate barrier layer (40) of the fluid vessel (30) into a modified dome shape with a defined volume by biaxial elongation of the first laminate barrier layer (40), wherein the first laminate barrier layer (40) comprises at least one layer of a biaxially oriented thermoplastic polymer;
(ii) depositing a product material onto the first laminate barrier layer (40) such that the product material substantially fills the defined volume;
(iii) disposing a second laminate barrier layer (50) of the fluid vessel (30) on the first laminate barrier layer (40), wherein the second laminate barrier layer (50) is planar;
(iv) sealing the first and second laminate barrier layers (40, 50) together at their perimeters to form a fluid-tight enclosure for containing the product material; and
(c) permanently bonding the second laminate barrier layer (50) of the fluid vessel (30) to a portion of the printed base card (20).

15. The method of claim 14, wherein the modified dome shape of the first laminate barrier layer (40) is resiliently sustainable when the fluid vessel (30) is sealed.

16. The method of claims 14 or 15, wherein the biaxially oriented thermoplastic polymer comprises a polyethylene, a polypropylene, a polyester, a polyamide, a polyarylate, or a mixture thereof.

17. The method of claim 16, wherein the biaxially oriented thermoplastic polymer comprises a polyethylene terephthalate.

18. The method of any of claims 14 to 17, wherein one or both of the first and second laminate barrier layers (40, 50) comprise a layer of aluminum foil, optionally, wherein the aluminum foil is less than about 0,0254 mm (0.001 inches) in thickness.

19. The method of any of claims 14 to 18, wherein the first and second laminate barrier layers (40, 50) are sealed together by heat sealing or with an adhesive.

20. The method of any of claims 14 to 19, wherein step (i) comprises applying gas pressure to the first laminate barrier layer (40) to form the modified dome shape.

21. The method of claim 20, wherein the gas pressure is 0.7 bar (10 psi) to 9.7 bar (140 psi) and/or wherein the gas pressure is applied for a time period ranging from 0.01 seconds to 1 seconds.

22. The method of any of claims 14 to 21, wherein the fluid vessel (30) comprises a dispensing tip (100).

23. The method of claim 22, further comprising die cutting the base card (20) to form an opening strip (80) defined by a line of perforation, wherein the line of perforation intersects the dispensing tip (100).

24. The method of claim 23, wherein the first and second laminate barrier layers (40, 50) are sealed together at their perimeters to form the fluid-tight enclosure and a planar extension tab, wherein the planar extension tab encloses the dispensing tip (100) and overlays the opening strip (80).

## Patentansprüche

1. Zusammengesetzte Verpackung (10), die umfasst:
(a) eine gedruckte Grundkarte (20); und
(b) einen Flüssigkeitsbehälter (30), der (i) eine erste Laminatbarrierenschicht (40), die mindestens eine Schicht eines biaxial orientierten thermoplastischen Polymers umfasst, (ii) ein Produktmaterial, und (iii) eine zweite Laminatbarrierenschicht (50) umfasst, wobei ein Abschnitt der ersten Laminatbarrierenschicht (40) eine modifizierte Kuppelform umfasst, die darin durch biaxiale Dehnung der ersten Laminatbarrierenschicht (40) ausgebildet ist, die modifizierte Kuppelform ein definiertes Volumen umfasst, und das Produktmaterial das definierte Volumen im Wesentlichen füllt, wobei die zweite Laminatbarrierenschicht (50) eben ist, wobei die erste und die zweite Laminatbarrierenschicht (40, 50) an ihren Umfängen miteinander versiegelt sind, um einen flüssigkeitsdichten Einschluss zum Enthalten des Produktmaterials zu bilden,
wobei die zweite Laminatbarrierenschicht (50) dauerhaft an einen Abschnitt der gedruckten Grundkarte (20) gebunden ist.

2. Zusammengesetzte Verpackung (10) nach Anspruch 1, wobei die modifizierte Kuppelform der ersten Laminatbarrierenschicht (40) elastisch belastbar ist, wenn der Flüssigkeitsbehälter (30) versiegelt ist.

3. Zusammengesetzte Verpackung (10) nach Anspruch 1 oder 2, wobei das biaxial orientierte thermoplastische Polymer Polyethylen, Polypropylen, Polyester, Polyamid, Polyarylat oder eine Mischung davon umfasst.

4. Zusammengesetzte Verpackung (10) nach Anspruch 3, wobei das biaxial orientierte thermoplastische Polymer Polyethylenterephthalat umfasst.

5. Zusammengesetzte Verpackung (10) nach einem der Ansprüche 1 bis 4, wobei die erste und/oder die zweite Laminatbarrierenschicht (40, 50) eine Schicht aus Aluminiumfolie, umfasst, wobei die Aluminiumfolie optional eine Dicke von weniger als 0,0254 mm (0,001 Zoll) umfasst.

6. Zusammengesetzte Verpackung (10) nach einem der Ansprüche 1 bis 5, wobei das Produktmaterial eine Flüssigkeit ist.

7. Zusammengesetzte Verpackung (10) nach einem der Ansprüche 1 bis 6, wobei der Flüssigkeitsbehälter (30) eine Spenderspitze (100) umfasst.

8. Zusammengesetzte Verpackung (10) nach Anspruch 7, wobei die Grundkarte (20) einen Öffnungsstreifen (80) umfasst.

9. Zusammengesetzte Verpackung (10) nach Anspruch 8, wobei der Öffnungsstreifen (80) durch eine Perforationslinie begrenzt ist, die die Spenderspitze (100) schneidet.

10. Zusammengesetzte Verpackung (10) nach Anspruch 8 oder 9, wobei der Flüssigkeitsbehälter (30) ferner eine ebene Verlängerungslasche (110) umfasst, die durch die erste und zweite Laminatbarrierenschicht (40, 50) gebildet wird, wobei die ebene Verlängerungslasche (110) die Spenderspitze (100) einschließt und über dem Öffnungsstreifen (80) liegt.

11. Zusammengesetzte Verpackung (10) nach einem der Ansprüche 7 bis 10, wobei die Spenderspitze (100) wiederverschließbar ist.

12. Zusammengesetzte Verpackung (10) nach einem der Ansprüche 1 bis 11, wobei die Grundkarte (20) weniger flexibel als die erste Laminatbarrierenschicht (40) ist.

13. Zusammengesetzte Verpackung nach einem der Ansprüche 1 bis 12, wobei die Grundkarte (20) einen Papierfaserstoff umfasst.

14. Verfahren zum Herstellen einer Zusammengesetzten Verpackung (10), die eine gedruckte Grundkarte (20) und einen Flüssigkeitsbehälter (30) umfasst, das die Schritte umfasst:
(a) Bereitstellen einer gedruckten Grundkarte (20);
(b) Bilden eines Flüssigkeitsbehälters (30) durch:
(i) Bilden eines Abschnitts einer ersten Laminatbarrierenschicht (40) des Flüssigkeitsbehälters (30) zu einer modifizierten Kuppelform mit einem definierten Volumen durch biaxiales Dehnen der ersten Laminatbarrierenschicht (40), wobei die erste Laminatbarrierenschicht (40) mindestens eine Schicht eines biaxial orientierten thermoplastischen Polymers umfasst;
(ii) Aufbringen eines Produktmaterials auf die erste Laminatbarrierenschicht (40), so dass das Produktmaterial das definierte Volumen im Wesentlichen füllt;
(iii) Anordnen einer zweiten Laminatbarrierenschicht (50) des Flüssigkeitsbehälters (30) auf der ersten Laminatbarrierenschicht (40), wobei die zweite Laminatbarrierenschicht (50) eben ist;
(iv) Versiegeln der ersten und zweiten Laminatbarrierenschicht (40, 50) an ihren Umfängen miteinander, um einen flüssigkeitsdichten Einschluss zum Enthalten des Produktmaterials zu bilden; und
(c) dauerhaftes Binden der zweiten Laminatbarrierenschicht (50) des Flüssigkeitsbehälters (30) an einen Abschnitt der gedruckten Grundkarte (20).

15. Verfahren nach Anspruch 14, wobei die modifizierte Kuppelform der ersten Laminatbarrierenschicht (40) elastisch belastbar ist, wenn der Flüssigkeitsbehälter (30) versiegelt ist.

16. Verfahren nach Anspruch 14 oder 15, wobei das biaxial orientierte thermoplastische Polymer Polyethylen, Polypropylen, Polyester, Polyamid, Polyarylat oder eine Mischung davon umfasst.

17. Verfahren nach Anspruch 16, wobei das biaxial orientierte thermoplastische Polymer Polyethylenterephthalat umfasst.

18. Verfahren nach einem der Ansprüche 14 bis 17, wobei die erste und/oder die zweite Laminatbarrierenschicht (40, 50) eine Schicht aus Aluminiumfolie umfasst, wobei die Aluminiumfolie optional eine Dicke von weniger als 0,0254 mm (0,001 Zoll) umfasst.

19. Verfahren nach einem der Ansprüche 14 bis 18, wobei die erste und zweite Laminatbarrierenschichten (40, 50) durch Heißsiegeln oder mit einem Klebemittel miteinander versiegelt werden.

20. Verfahren nach einem der Ansprüche 14 bis 19, wobei der Schritt (i) das Ausüben eines Gasdrucks auf die erste Laminatbarrierenschicht (40) umfasst, um die modifizierte Kuppelform zu bilden.

21. Verfahren nach Anspruch 20, wobei der Gasdruck 0,7 Bar (10 psi) bis 9,7 Bar (140 psi) beträgt und/oder wobei der Gasdruck für eine Zeitspanne ausgeübt wird, die von 0,01 Sekunden bis 1 Sekunde reicht.

22. Verfahren nach einem der Ansprüche 14 bis 21, wobei der Flüssigkeitsbehälter (30) eine Spenderspitze (100) umfasst.

23. Verfahren nach Anspruch 22, das ferner das Schneiden der Grundkarte (20) umfasst, um einen Öffnungsstreifen (80) zu bilden, der durch eine Perforationslinie begrenzt wird, wobei die Perforationslinie die Spenderspitze (100) schneidet.

24. Verfahren nach Anspruch 23, wobei die erste und zweite Laminatbarrierenschicht (40, 50) an ihren Umfängen miteinander versiegelt werden, um den flüssigkeitsdichten Einschluss und eine ebene Verlängerungslasche zu bilden, wobei die ebene Verlängerungslasche die Spenderspitze (100) einschließt und über dem Öffnungsstreifen (80) liegt.

## Revendications

1. Conditionnement unitisé (10) comprenant :
(a) une carte imprimée de base (20) ; et
(b) un récipient pour fluide (30) comprenant (i) une première couche de barrière stratifiée (40) comprenant au moins une couche de polymère thermoplastique à orientation biaxiale, (ii) le produit, et (iii) une deuxième couche de barrière stratifiée (50) ;
dans lequel une portion de la première couche de barrière stratifiée (40) possède une configuration sous la forme d'un dôme modifié qui lui a été conférée par allongement biaxial de la première couche de barrière stratifiée (40), la configuration sous la forme d'un dôme modifié possède un volume défini et le produit remplit de manière substantielle le volume défini ; dans lequel la deuxième couche de barrière stratifiée (50) est plane ; dans lequel les première et deuxième couches de barrière stratifiées (40, 50) sont scellées l'une à l'autre le long de leurs périmètres pour former une enceinte étanche aux fluides pour contenir le produit ;
dans lequel la deuxième couche de barrière stratifiée (50) est collée à demeure à une portion de la carte imprimée de base (20).

2. Conditionnement unitisé (10) selon la revendication 1, dans lequel la configuration sous la forme d'un dôme modifié de la première couche de barrière stratifiée (40) se maintient par résilience lorsque le récipient pour fluide (30) est scellé.

3. Conditionnement unitisé (10) selon la revendication 1 ou 2, dans lequel le polymère thermoplastique à orientation biaxiale comprend un polyéthylène, un polypropylène, un polyester, un polyamide, un polyarylate, ou un de leurs mélanges.

4. Conditionnement unitisé (10) selon la revendication 3, dans lequel le polymère thermoplastique à orientation biaxiale comprend un polyéthylène téréphtalate.

5. Conditionnement unitisé (10) selon l'une quelconque des revendications 1 à 4, dans lequel une desdites première et deuxième couches de barrière stratifiées (40, 50) ou les deux comprennent une couche en feuille d'aluminium, de manière facultative, dans lequel la feuille d'aluminium possède une épaisseur inférieure à 0,0254 mm (0,001 pouce).

6. Conditionnement unitisé (10) selon l'une quelconque des revendications 1 à 5, dans lequel le produit est un liquide.

7. Conditionnement unitisé (10) selon l'une quelconque des revendications 1 à 6, dans lequel le récipient pour fluide (30) comprend une pointe de distribution (100).

8. Conditionnement unitisé (10) selon la revendication 7, dans lequel la carte de base (20) comprend une bande d'ouverture (80).

9. Conditionnement unitisé (10) selon la revendication 8, dans lequel la bande d'ouverture (80) est définie par une ligne de perforation qui coupe la pointe de distribution (100).

10. Conditionnement unitisé (10) selon la revendication 8 ou 9, dans lequel le récipient pour fluide (30) comprend en outre une patte d'extension plane (110) formée par lesdites première et deuxième couches de barrière stratifiées (40, 50), dans lequel la patte d'extension plane (110) renferme la pointe de distribution (100) et recouvre la bande d'ouverture (80).

11. Conditionnement unitisé (10) selon l'une quelconque des revendications 7 à 10, dans lequel la pointe de distribution (100) est refermable.

12. Conditionnement unitisé (10) selon l'une quelconque des revendications 1 à 11, dans lequel la carte de base (20) est moins flexible que la première couche de barrière stratifiée (40).

13. Conditionnement unitisé selon l'une quelconque des revendications 1 à 12, dans lequel la carte de base (20) comprend une matière de base en papier.

14. Procédé de fabrication d'un conditionnement unitisé (10) comprenant une carte imprimée de base (20) et un récipient pour fluide (30), comprenant :
(a) la fourniture d'une carte imprimée de base (20) ;
(b) la formation d'un récipient pour fluide (30) :
(i) en conférant à une portion d'une première couche de barrière stratifiée (40) du récipient pour fluide (30) une configuration sous la forme d'un dôme modifié comprenant un volume défini par allongement biaxial de la première couche de barrière stratifiée (40), dans lequel la première couche de barrière stratifiée (40) comprend au moins une couche d'un polymère thermoplastique à orientation biaxiale ;
(ii) en déposant le produit sur la première couche de barrière stratifiée (40) de telle sorte que le produit remplit essentiellement le volume défini ;
(iii) en déposant une deuxième couche de barrière stratifiée (50) du récipient pour fluide (30) sur la première couche de barrière stratifiée (40), dans lequel la deuxième couche de barrière stratifiée (50) est plane ;
(iv) en scellant l'une à l'autre lesdites première et deuxième couches de barrière stratifiées (40, 50) le long de leurs périmètres pour former une enceinte étanche aux fluides pour contenir le produit ; et
(c) le collage à demeure de la deuxième couche de barrière stratifiée (50) du récipient pour fluide (30) à une portion de la carte imprimée de base (20).

15. Procédé selon la revendication 14, dans lequel la configuration sous la forme d'un dôme modifié de la première couche de barrière stratifiée (40) se maintient par résilience lorsque le récipient pour fluide (30) est scellé.

16. Procédé selon la revendication 14 ou 15, dans lequel le polymère thermoplastique à orientation biaxiale comprend un polyéthylène, un polypropylène, un polyester, un polyamide, un polyarylate, ou un de leurs mélanges.

17. Procédé selon la revendication 16, dans lequel le polymère thermoplastique à orientation biaxiale comprend un polyéthylène téréphtalate.

18. Procédé selon l'une quelconque des revendications 14 à 17, dans lequel une desdites première et deuxième couches de barrière stratifiées (40, 50) ou les deux comprennent une couche en feuille d'aluminium, de manière facultative, dans lequel la feuille d'aluminium possède une épaisseur inférieure à environ 0,0254 mm (0,001 pouce).

19. Procédé selon l'une quelconque des revendications 14 à 18, dans lequel lesdites première et deuxième couches de barrière stratifiées (40, 50) sont scellées l'une à l'autre par thermosoudage ou avec un adhésif.

20. Procédé selon l'une quelconque des revendications 14 à 19, dans lequel l'étape (i) comprend l'application d'une pression de gaz sur la première couche de barrière stratifiée (40) pour former la configuration sous la forme d'un dôme modifié.

21. Procédé selon la revendication 20, dans lequel la pression de gaz s'élève de 0,7 bar (10 psi) à 9,7 bar (140 psi) et/ou dans lequel on applique la pression de gaz pendant un laps de temps se situant dans la plage de 0,01 seconde à 1 seconde.

22. Procédé selon l'une quelconque des revendications 14 à 21, dans lequel le récipient pour fluide (30) comprend une pointe de distribution (100).

23. Procédé selon la revendication 22, comprenant en outre le découpage de la carte de base (20) à l'emporte-pièce pour former une bande d'ouverture (80) définie par une ligne de perforation, dans lequel la ligne de perforation coupe la pointe de distribution (100).

24. Procédé selon la revendication 23, dans lequel lesdites première et deuxième couches de barrière stratifiées (40, 50) sont scellées l'une à l'autre le long de leurs périmètres pour former l'enceinte étanche aux fluides et une patte d'extension plane, dans lequel la pâte d'extension plane renferme la pointe de distribution (100) et recouvre la bande d'ouverture (80).
